# EUROPÄISCHE PATENTSCHRIFT

(11) **EP 4 332 538 B1**
(45) Veröffentlichungstag und Bekanntmachung des Hinweises auf die Patenterteilung: **25.11.2026**
(21) Anmeldenummer: 23184587.6
(22) Anmeldetag: 11.07.2023
(51) Int. Cl.: G01M 17/02, B29D 30/00

(54) **VERFAHREN ZUR BESTIMMUNG DER VERARBEITBARKEIT EINES REIFENS**
METHOD FOR DETERMINING THE PROCESSABILITY OF A TIRE
PROCÉDÉ DE DÉTERMINATION DE L'APTITUDE AU TRAITEMENT D'UN PNEU

(30) Priorität: 29.08.2022 DE 102022208944
(43) Veröffentlichungstag der Anmeldung: 06.03.2024
(73) Patentinhaber: Continental Reifen Deutschland GmbH, 30175 Hannover (DE)
(72) Erfinder: Kirschning, Oliver, 30165 Hannover (DE); Arend, Dominik, 30165 Hannover (DE); Winkler, Jens, 30165 Hannover (DE)
(74) Vertreter: Continental Corporation

(56) Entgegenhaltungen:
- DE-A1- 3 624 589
- US-A- 4 257 264
- US-A1- 2001 040 682
- US-A1- 2013 319 101
- US-A1- 2022 055 424

## Beschreibung

Die Erfindung betrifft ein Verfahren zur Bestimmung der Verarbeitbarkeit eines Reifens.

Die Erfindung geht aus von einem Verfahren zur Bestimmung der Verarbeitbarkeit eines Reifens aufweisend einen der folgenden Schritte:
- Bereitstellen eines Reifens, aufweisend eine Reifenoberfläche, wobei die Reifenoberfläche Seitenwandbereiche aufweist;
- Bereitstellen einer Shearographiekomponente;
- Erzeugen einer shearographischen Aufnahme der Reifenoberfläche mittels der Shearographiekomponente.

Mittels der Shearographiekomponente kann beispielsweise eine erste Aufnahme der Reifenoberfläche bei einem vorgebbaren Initialluftdruck des Reifens erzeugt werden. Zeitlich danach kann mittels der Shearographiekomponente eine zweite Aufnahme der Reifenoberfläche erzeugt werden. Dabei weist der Reifen zum Zeitpunkt der zweiten Aufnahme insbesondere einen gegenüber dem Initialluftdruck veränderten Luftdruck, beispielsweise um 50 Millibar verändert auf. Dabei handelt es sich bei der Veränderung insbesondere um eine Erhöhung oder eine Verminderung. Bei dem Luftdruck und also auch dem Initialluftdruck handelt es sich um den in einer Untersuchungsvorrichtung für den Reifen herrschenden Luftdruck. **In** Abhängigkeit der ersten Aufnahme und der zweiten Aufnahme kann eine shearographische Darstellung von Strukturen der Reifenoberfläche und insbesondere der Seitenwandbereiche erzeugt werden.

Ziel der Bestimmung der Verarbeitbarkeit ist es beispielsweise solche Reifen zu bestimmen, bei denen eine Weiterverarbeitung technisch und/oder wirtschaftlich nicht sinnvoll ist. Insbesondere betrifft dies bereits an Fahrzeugen genutzte Reifen, die runderneuert werden sollen. Bei einer Runderneuerung werden Reifen insbesondere mit einem neuen Lauftreifen versehen. Für den Fall, wonach der Reifen bestimmte Schadstellen aufweist, kann die Weiterverarbeitung nicht mehr sinnvoll sein.

Bei dem Reifen handelt es sich beispielsweise um einen LKW-Reifen, um einen PKW-Reifen oder um einen Zweirad-Reifen.

Aus dem Stand der Technik sind Verfahren zur Bestimmung der Verarbeitbarkeit eines Reifens bekannt. Dabei ist es aus dem Stand der Technik auch bekannt, shearographische Aufnahmen von Oberflächen des Reifens zur Bewertung einer möglichen Verarbeitung oder Weiterverarbeitung des Reifens zu erzeugen. Anhand dieser Aufnahmen kann beispielsweise auf mögliche Schadstellen des Reifens, die eine Weiterverarbeitung des Reifens ausschließen könnten, geschlossen werden.

Stand der Technik ist aus DE 36 24 589 A1 und US 4 257 264 A bekannt.

Die aus dem Stand der Technik bekannten Verfahren könnten nicht optimal ausgebildet sein. So könnte es beispielsweise erforderlich sein, dass die shearographischen Aufnahmen mittels einer visuellen Untersuchung durch einen menschlichen Techniker ausgewertet oder andere Verfahrensschritte von einem menschlichen Techniker durchgeführt werden. Der Einsatz menschlicher Techniker könnte mit einer wirtschaftlich unvertretbar hohen Fehlerquote bei der Bestimmung der Verarbeitbarkeit des Reifens einhergehen. Darüber hinaus könnte der Einsatz menschlicher Techniker insgesamt mit wirtschaftlich inakzeptablen Kosten verbunden sein. Vollständig automatisierte Verfahrensabläufe hingegen, bei denen insbesondere eine vollständig elektronische oder computergestützte Bewertung der Verarbeitbarkeit des Reifens vorgenommen wird, sind regelmäßig wirtschaftlich effizienter gegenüber solchen Verfahren, die unter Einsatz von Menschen durchgeführt werden.

Der Erfindung liegt daher die Aufgabe zu Grunde, ein weitestgehend automatisiertes Verfahren zur Bestimmung der Verarbeitbarkeit eines Reifens bereitzustellen.

Gelöst wird die erfindungsgemäß gestellte Aufgabe dadurch, dass das Verfahren die folgenden weiteren Schritte aufweist:
- Bereitstellen einer Verarbeitungskomponente, wobei die Verarbeitungskomponente zur Verarbeitung einer mittels der Shearographiekomponente aufgenommenen shearographischen Aufnahme der Reifenoberfläche vorgesehen ist;
- Übertragen der mittels der Shearographiekomponente erzeugten shearographischen Aufnahme der Reifenoberfläche an die Verarbeitungskomponente;
- Bestimmen mittels der Verarbeitungskomponente anhand der mittels der Shearographiekomponente erzeugten shearographischen Aufnahme der Reifenoberfläche, welchen Grad an Lufteinschlüssen der Reifen aufweist;
- Aussenden eines Prozessfortführungssignals mittels der Verarbeitungskomponente, wobei das Prozessfortführungssignal nur dann versendet wird, wenn der mittels der Verarbeitungskomponente bestimmte Grad der Lufteinschlüsse des Reifens einen Maximalgrad nicht überschreitet,
wobei es sich bei der Verarbeitungskomponente um eine Künstliche-Intelligenz-Komponente handelt.

Bei dem Maximalgrad der Lufteinschlüsse handelt es sich um einen vorgebbaren Grad an Lufteinschlüssen des Reifens. Der Grad an Lufteinschlüssen stellt insbesondere ein Maß dafür dar, ob der Reifen unter technischen Aspekten noch weiter verarbeitbar ist.

Das Übertragen der mittels der Shearographiekomponente erzeugten shearographischen Aufnahme der Reifenoberfläche an die Verarbeitungskomponente kann insbesondere mittels einer Übertragungskomponente erfolgen. Bei der Übertragungskomponente kann es sich beispielsweise um ein Kabel handeln, wobei das Kabel zur elektrischen und/oder elektromagnetischen Übertragung von Signalen geeignet ist, und/oder die Übertragungskomponente kann zur Übertragung von Signalen mittels elektromagnetischer Wellen vorgesehen sein. Die Übertragungskomponente kann insbesondere Bestandteil der Verarbeitungskomponente und/oder der Shearographiekomponente sein.

Das Aussenden eines Prozessfortführungssignals erfolgt insbesondere elektrisch oder elektromagnetisch mittels der Verarbeitungskomponente und insbesondere mittels eines Sendemittels der Verarbeitungskomponente. Das Prozessfortführungssignal ist insbesondere elektrisch, elektronisch oder mittels eines Computers speicherbar und/oder verarbeitbar. Bei dem Sendemittel der Verarbeitungskomponente kann es sich beispielsweise um ein Kabel handeln, wobei das Kabel zur elektrischen und/oder elektromagnetischen Übertragung von Signalen geeignet ist, und/oder das Sendemittel der Verarbeitungskomponente kann zur Übertragung von Signalen mittels elektromagnetischer Wellen vorgesehen sein.

Insbesondere der Umstand, wonach die shearographische Inspektion ein vertretbares Maß an Lufteinschlüssen belegt, könnte eine notwendige Bedingung für eine Weiterverarbeitung des Reifens darstellen.

Bei der Verarbeitungskomponente handelt es sich beispielsweise um einen Computer oder eine elektronische Datenverarbeitungsanlage.

Durch den erfindungsgemäßen Umstand, wonach das Verfahren die folgenden weiteren Schritte aufweist:
- Bereitstellen einer Verarbeitungskomponente, wobei die Verarbeitungskomponente zur einer mittels der Shearographiekomponente aufgenommenen shearographischen Aufnahme der Reifenoberfläche vorgesehen ist;
- Übertragen der mittels der Shearographiekomponente erzeugten shearographischen Aufnahme der Reifenoberfläche an die Verarbeitungskomponente;
- Bestimmen mittels der Verarbeitungskomponente anhand der mittels der Shearographiekomponente erzeugten shearographischen Aufnahme der Reifenoberfläche, welchen Grad an Lufteinschlüssen der Reifen aufweist;
- Aussenden eines Prozessfortführungssignals mittels der Verarbeitungskomponente, wobei das Prozessfortführungssignal nur dann versendet wird, wenn der mittels der Verarbeitungskomponente bestimmte Grad der Lufteinschlüsse des Reifens einen Maximalgrad nicht überschreitet.
kann die weitere Verarbeitbarkeit des Reifens automatisch und unter Einsatz von Maschinen, insbesondere Computern, bestimmt werden. Zu den weiteren Verarbeitungsschritten kann dann insbesondere auch eine optische Inspektion des Reifens gehören. Da das Prozessfortführungssignal insbesondere elektrisch, elektronisch oder mittels eines Computers speicherbar und/oder verarbeitbar ist, können weitere Verarbeitungsschritte zuverlässig und mittels automatisierter Abläufe und nach Möglichkeit ohne den Einsatz menschlicher Techniker vorgenommen werden.

Folglich wird ein automatisiertes und also verbessertes Verfahren zur Bestimmung der Verarbeitbarkeit eines Reifens bereitgestellt.

Weitere vorteilhafte Ausgestaltungsformen der vorliegenden Erfindung sind Gegenstand der Unteransprüche.

**Bei der** vorliegenden Erfindung handelt es sich bei der Verarbeitungskomponente um eine Künstliche-Intelligenz-Komponente.

Eine Künstliche-Intelligenz-Komponente ist eine Computerkomponente zur Auswertung und Analyse von Daten, Bildern und Informationen mittels einer Künstlichen Intelligenz. Die Künstliche-Intelligenz-Komponente ist beispielsweise eine Machine-Learning-Komponente oder ein künstliches Neuronales Netz oder eine Deep-Learning-Komponente.

Gemäß einer nächsten vorzugsweisen Ausgestaltungsform der vorliegenden Erfindung weist das Verfahren die folgenden weiteren Schritte auf:
- Bereitstellen einer Aufnahmekomponente, wobei die Aufnahmekomponente zur Aufnahme eines Bildes eines Seitenwandbereichs vorgesehen ist;
- Aufnahme eines Bildes des Seitenwandbereichs mittels der Aufnahmekomponente;
- Übertragen des mittels der Aufnahmekomponente aufgenommenen Bildes des Seitenwandbereichs an die Verarbeitungskomponente, die zur Verarbeitung eines mittels der Aufnahmekomponente aufgenommenen Bildes des Seitenwandbereichs vorgesehen ist;
- Prüfen mittels der Verarbeitungskomponente anhand des mittels der Aufnahmekomponente aufgenommenen Bildes des Seitenwandbereichs, ob eine technische Betriebsinformation auslesbar an dem Seitenwandbereich gespeichert ist;
- Aussenden des Prozessfortführungssignals mittels der Verarbeitungskomponente, wobei das Prozessfortführungssignal nur dann versendet wird, wenn die technische Betriebsinformation auslesbar an dem Seitenwandbereich gespeichert ist und der mittels der Verarbeitungskomponente bestimmte Grad der Lufteinschlüsse des Reifens einen Maximalgrad nicht überschreitet.

Insbesondere der Umstand, wonach die technische Betriebsinformation auslesbar ist und die shearographische Inspektion ein vertretbares Maß an Lufteinschlüssen belegt, könnte eine notwendige Bedingung für eine Weiterverarbeitung des Reifens darstellen.

Die Aufnahme des Bildes des Seitenwandbereichs mittels der Aufnahmekomponente erfolgt beispielsweise photographisch. Bei dem Seitenwandbereich handelt es sich um einen der Seitenwandbereiche der Reifenoberfläche des Reifens

Bei der technischen Betriebsinformation handelt es sich beispielsweise um eine Information zur Artikelidentifikation, also einer Information zu einer eindeutigen Identifizierbarkeit des Reifens oder der Art des Reifens. Die technische Betriebsinformation ist insbesondere optisch auslesbar an dem Seitenwandbereich gespeichert.

Das Übertragen des mittels der Aufnahmekomponente aufgenommenen Bildes des Seitenwandbereichs an die Verarbeitungskomponente erfolgt insbesondere mittels einer Übertragungskomponente. Bei der Übertragungskomponente kann es sich beispielsweise um ein Kabel handeln, wobei das Kabel zur elektrischen und/oder elektromagnetischen Übertragung von Signalen geeignet ist, und/oder die Übertragungskomponente kann zur Übertragung von Signalen mittels elektromagnetischer Wellen vorgesehen sein. Die Übertragungskomponente kann insbesondere Bestandteil der Verarbeitungskomponente und/oder der Aufnahmekomponente sein.

Gemäß einer nächsten vorzugsweisen Ausgestaltungsform der vorliegenden Erfindung wird an die Künstliche-Intelligenz-Komponente mindestens ein weiteres Bild eines Seitenwandbereichs zusammen mit einer dem weiteren Bild zugeordneten Information darüber, ob in dem auf dem weiteren Bild wiedergegebenen Seitenwandbereich eine technische Betriebsinformation auslesbar gespeichert ist, übertragen. Dabei wird das Prüfen mittels der Künstliche-Intelligenz-Komponente anhand des mittels der Aufnahmekomponente aufgenommenen Bildes des Seitenwandbereichs, ob eine technische Betriebsinformation auslesbar an dem Seitenwandbereich gespeichert ist, in Abhängigkeit des weiteren Bildes und der dem weiteren Bild zugeordneten Information durchgeführt.

Gemäß einer nächsten vorzugsweisen Ausgestaltungsform der vorliegenden Erfindung wird an die Künstliche-Intelligenz-Komponente mindestens eine weitere shearographische Aufnahme einer Reifenoberfläche zusammen mit einer der weiteren shearographischen Aufnahme zugeordneten Information darüber, welchen Grad an Lufteinschlüssen der in der weiteren shearographischen Aufnahme wiedergegebene Reifen aufweist, übertragen.

Dabei wird das Bestimmen des Grades der Lufteinschlüsse des Reifens mittels der Künstliche-Intelligenz-Komponente anhand der mittels der Shearographiekomponente aufgenommenen Aufnahme der Reifenoberfläche, in Abhängigkeit der weiteren shearographischen Aufnahme und der weiteren shearographischen Aufnahme zugeordneten Information durchgeführt.

Gemäß einer nächsten vorzugsweisen Ausgestaltungsform der vorliegenden Erfindung weist das Verfahren den folgenden Schritt auf: Bereitstellen einer Reifenweiterverarbeitungskomponente, wobei die Reifenweiterverarbeitungskomponente zur Weiterverarbeitung eines Reifens vorgesehen ist, und Empfangen des Prozessfortführungssignals durch die Reifenweiterverarbeitungskomponente.

Die Reifenweiterverarbeitungskomponente weist insbesondere Empfangsmittel zum Empfangen elektrischer oder elektromagnetischer Signale auf.

Gemäß einer nächsten vorzugsweisen Ausgestaltungsform der vorliegenden Erfindung werden die zuvor genannten Schritte mehrfach nacheinander ausgeführt und eine Big-Data-Auswertung der shearographischen Aufnahmen der Reifenoberflächen und der Bilder der Seitenwandbereiche wird vorgenommen.

Durch den erfindungsgemäßen Umstand, wonach die zuvor genannten Verfahrensschritte mehrfach nacheinander ausgeführt werden und eine Big-Data-Auswertung der shearographischen Aufnahmen der Reifenoberflächen und der Bilder der Seitenwandbereiche vorgenommen wird, können anhand der Big-Data Auswertung beispielsweise statistische Zusammenhänge zwischen den shearographischen Aufnahmen der Reifenoberflächen und den Bildern der Seitenwandbereiche mit möglichen Fehlstellen oder Beschädigungen des Reifens ermittelt werden. Dabei handelt es sich insbesondere um Fehlstellen oder Beschädigungen, die durch Lufteinschlüsse im Reifen verursacht sind. **In** Abhängigkeit dieser Zusammenhänge könnten weitere Zusammenhänge oder Korrelationen zwischen den shearographischen Aufnahmen der Reifenoberflächen und den Bildern der Seitenwandbereiche mit der Qualität des Reifens insgesamt ermittelt werden.

Weitere Vorteile, Merkmale und Einzelheiten, auf die die Erfindung in ihrem Umfang aber nicht beschränkt ist, werden nun anhand der Zeichnungen näher beschrieben.

Es zeigt:
Fig. 1: Eine schematische Darstellung von Komponenten zur Durchführung des erfindungsgemäßen Verfahrens;
Fig. 2: Eine schematische Darstellung eines Ablaufs des erfindungsgemäßen Verfahrens.

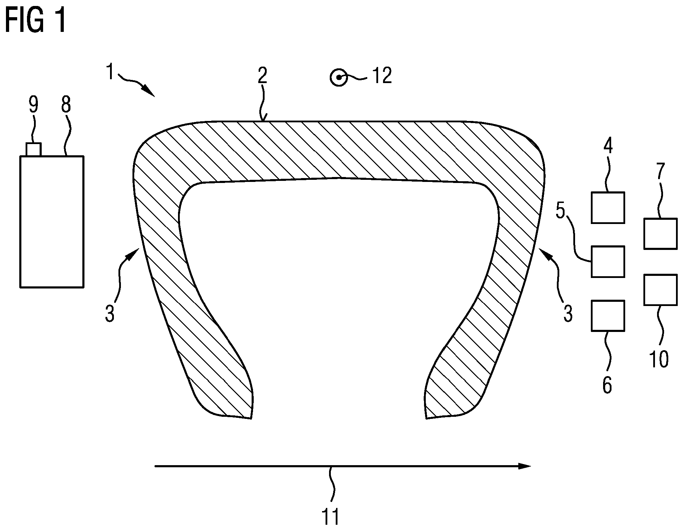

In der Figur 1 sind Komponenten zur Durchführung eines erfindungsgemäßen Verfahrens zur Bestimmung der Verarbeitbarkeit eines Reifens 1 schematisch dargestellt.

Der Reifen 1, der um eine Rotationsachse 11 in eine Um laufrichtung 12 rotierbar ist, weist eine Reifenoberfläche 2 auf, wobei die Reifenoberfläche 2 Seitenwandbereiche 3 aufweist.

Mittels einer Aufnahmekomponente 4, wobei die Aufnahmekomponente 4 zur Aufnahme eines Bildes eines Seitenwandbereichs 3 vorgesehen ist, wird ein Bild des Seitenwandbereichs 3 aufgenommen.

Mittels einer Shearographiekomponente 5 wird eine shearographische Aufnahme der Reifenoberfläche 2 erzeugt.

Zur Durchführung des Verfahrens wird eine Verarbeitungskomponente 6 bereitgestellt, wobei die Verarbeitungskomponente 6 zur Verarbeitung eines mittels der Aufnahmekomponente 4 aufgenommenen Bildes des Seitenwandbereichs 3 und zur Verarbeitung einer mittels der Shearographiekomponente 5 aufgenommenen shearographischen Aufnahme der Reifenoberfläche 2 vorgesehen ist. Bei der Verarbeitungskomponente 6 handelt es sich um eine Künstliche-Intelligenz-Komponente.

Das mittels der Aufnahmekomponente 4 aufgenommene Bild des Seitenwandbereichs 3 wird an die Verarbeitungskomponente 6 insbesondere mittels einer Übertragungskomponente 7 übertragen.

Das Übertragen der mittels der Shearographiekomponente 5 erzeugten shearographischen Aufnahme der Reifenoberfläche 2 an die Verarbeitungskomponente 6 kann insbesondere mittels einer Übertragungskomponente 10 erfolgen.

Mittels der Verarbeitungskomponente 6 kann anhand des mittels der Aufnahmekomponente 4 aufgenommenen Bildes des Seitenwandbereichs 3 geprüft werden, ob eine technische Betriebsinformation auslesbar an dem Seitenwandbereich 3 gespeichert ist.

Mittels der Verarbeitungskomponente 6 wird anhand der mittels der Shearographiekomponente 5 erzeugten shearographischen Aufnahme der Reifenoberfläche 2 bestimmt welchen Grad an Lufteinschlüssen der Reifen 1 aufweist.

Mittels der Verarbeitungskomponente 6 kann ein Prozessfortführungssignal ausgesendet werden, wobei das Prozessfortführungssignal nur dann versendet wird, wenn die technische Betriebsinformation auslesbar an dem Seitenwandbereich 3 gespeichert ist und der mittels der Verarbeitungskomponente 6 bestimmte Grad der Lufteinschlüsse des Reifens 1 einen Maximalgrad nicht überschreitet.

Insbesondere wird eine Reifenweiterverarbeitungskomponente 8 bereitgestellt, wobei die Reifenweiterverarbeitungskomponente 8 zur Weiterverarbeitung des Reifens 1 vorgesehen ist. Die Reifenweiterverarbeitungskomponente 8 ist zu einem Empfangen des Prozessfortführungssignals geeignet. Die Reifenweiterverarbeitungskomponente 8 weist dazu insbesondere Empfangsmittel 9 auf, wobei die Empfangsmittel 9 vorzugsweise zum elektrischen oder elektromagnetischen Empfangen des Prozessfortführungssignals vorgesehen ist.

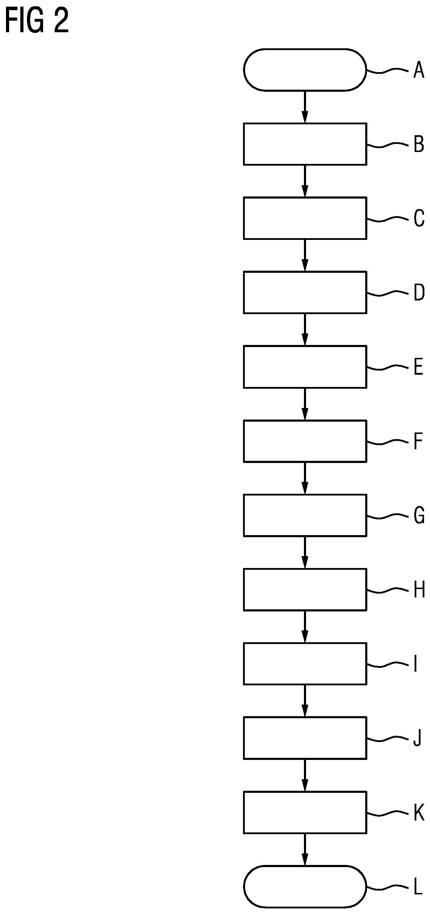

In der Figur 2 ist ein Ablauf eines erfindungsgemäßen Verfahrens gemäß einer beispielhaften Ausführungsform schematisch dargestellt. In Schritt A wird das Verfahren begonnen, in Schritt B wird ein Reifen 1 bereitgestellt. Im folgenden Schritt C wird eine Aufnahmekomponente 4 bereitgestellt und im anschließenden Schritt D wird ein Bild des Seitenwandbereichs 3 mittels der Aufnahmekomponente 4 aufgenommen.

In Schritt E erfolgt das Bereitstellen einer Shearographiekomponente 5 und im Schritt F erfolgt das Erzeugen einer shearographischen Aufnahme der Reifenoberfläche 2 mittels der Shearographiekomponente 5.

In Schritt G erfolgt das Bereitstellen einer Verarbeitungskomponente 6, und in Schritt H das Übertragen der mittels der Shearographiekomponente 5 erzeugten shearographischen Aufnahme der Reifenoberfläche 2 an die Verarbeitungskomponente 6.

In Schritt I erfolgt das Prüfen mittels der Verarbeitungskomponente 6 anhand des mittels der Aufnahmekomponente 4 aufgenommenen Bildes des Seitenwandbereichs 3, ob eine technische Betriebsinformation auslesbar an dem Seitenwandbereich 3 gespeichert ist.

In Schritt J erfolgt das Bestimmen mittels der Verarbeitungskomponente 6 anhand der mittels der Shearographiekomponente 5 erzeugten shearographischen Aufnahme der Reifenoberfläche 2, welchen Grad an Lufteinschlüssen der Reifen 1 aufweist.

In Schritt K wird ein Prozessfortführungssignal mittels der Verarbeitungskomponente 6 ausgesendet, wobei das Prozessfortführungssignal nur dann versendet wird, wenn die technische Betriebsinformation auslesbar an dem Seitenwandbereich 3 gespeichert ist und der mittels der Verarbeitungskomponente 6 bestimmte Grad der Lufteinschlüsse des Reifens 1 einen Maximalgrad nicht überschreitet.

Mit Schritt L wird das Verfahren abgeschlossen.

### Bezugszeichenliste

- 1: Reifen
- 2: Reifenoberfläche
- 3: Seitenwandbereiche
- 4: Aufnahmekomponente
- 5: Shearographiekomponente
- 6: Verarbeitungskomponente
- 7: Übertragungskomponente
- 8: Reifenweiterverarbeitungskom ponente
- 9: Empfangsmittel der Reifenweiterverarbeitungskomponente
- 10: Übertragungskomponente der Shearographiekomponente
- 11: Rotationsachse
- 12: Umlaufrichtung

## Patentansprüche

1. Verfahren zur Bestimmung der Verarbeitbarkeit eines Reifens (1), aufweisend einen der folgenden Schritte
- Bereitstellen eines Reifens (1), aufweisend eine Reifenoberfläche (2), wobei die Reifenoberfläche (2) Seitenwandbereiche (3) aufweist;
- Bereitstellen einer Shearographiekomponente (5);
- Erzeugen einer shearographischen Aufnahme der Reifenoberfläche (2) mittels der Shearographiekomponente (5), **gekennzeichnet durch** die weiteren Schritte:
- Bereitstellen einer Verarbeitungskomponente (6), wobei die Verarbeitungskomponente (6) zur Verarbeitung einer mittels der Shearographiekomponente (5) aufgenommenen shearographischen Aufnahme der Reifenoberfläche (2) vorgesehen ist;
- Übertragen der mittels der Shearographiekomponente (5) erzeugten shearographischen Aufnahme der Reifenoberfläche (2) an die Verarbeitungskomponente (6);
- Bestimmen mittels der Verarbeitungskomponente (6) anhand der mittels der Shearographiekomponente (5) erzeugten shearographischen Aufnahme der Reifenoberfläche (2), welchen Grad an Lufteinschlüssen der Reifen (1) aufweist;
- Aussenden eines Prozessfortführungssignals mittels der Verarbeitungskomponente (6), wobei das Prozessfortführungssignal nur dann versendet wird, wenn der mittels der Verarbeitungskomponente (6) bestimmte Grad der Lufteinschlüsse des Reifens (1) einen Maximalgrad nicht, wobei es sich bei der Verarbeitungskomponente (6) um eine Künstliche-Intelligenz-Komponente (6) handelt.

2. Verfahren nach einem der vorhergehenden Ansprüche, **gekennzeichnet**
**durch** die weiteren Schritte:
- Bereitstellen einer Aufnahmekomponente (4), wobei die Aufnahmekomponente (4) zur Aufnahme eines Bildes eines Seitenwandbereichs (3) vorgesehen ist;
- Aufnahme eines Bildes des Seitenwandbereichs (3) mittels der Aufnahmekomponente (4);
- Übertragen des mittels der Aufnahmekomponente (4) aufgenommenen Bildes des Seitenwandbereichs (3) an die Verarbeitungskomponente (6), die zur Verarbeitung eines mittels der Aufnahmekomponente (4) aufgenommenen Bildes des Seitenwandbereichs (3) vorgesehen ist;
- Prüfen mittels der Verarbeitungskomponente (6) anhand des mittels der Aufnahmekomponente (4) aufgenommenen Bildes des Seitenwandbereichs (3), ob eine technische Betriebsinformation auslesbar an dem Seitenwandbereich (3) gespeichert ist;
- Aussenden des Prozessfortführungssignals mittels der Verarbeitungskomponente (6), wobei das Prozessfortführungssignal nur dann versendet wird, wenn die technische Betriebsinformation auslesbar an dem Seitenwandbereich (3) gespeichert ist und der mittels der Verarbeitungskomponente (6) bestimmte Grad der Lufteinschlüsse des Reifens (1) einen Maximalgrad nicht überschreitet.

3. Verfahren nach Anspruch **2, dadurch gekennzeichnet, dass** an die Künstliche-Intelligenz-Komponente (6) mindestens ein weiteres Bild eines Seitenwandbereichs (3) zusammen mit einer dem weiteren Bild zugeordneten Information darüber, ob in dem auf dem weiteren Bild wiedergegebenen Seitenwandbereich (3) eine technische Betriebsinformation auslesbar gespeichert ist, übertragen wird, wobei das Prüfen mittels der Künstliche-Intelligenz-Komponente (6) anhand des mittels der Aufnahmekomponente (4) aufgenommenen Bildes des Seitenwandbereichs (3), ob eine technische Betriebsinformation auslesbar an dem Seitenwandbereich (3) gespeichert ist, in Abhängigkeit des weiteren Bildes und der dem weiteren Bild zugeordneten Information durchgeführt wird.

4. Verfahren nach einem der vorhergehenden Ansprüche 1 bis 3, **dadurch gekennzeichnet, dass** an die Künstliche-Intelligenz-Komponente (6) mindestens ein weitere shearographische Aufnahme einer Reifenoberfläche (2) zusammen mit einer der weiteren shearographischen Aufnahme zugeordneten Information darüber, welchen Grad an Lufteinschlüssen der in der weiteren shearographischen Aufnahme wiedergegebene Reifen (1) aufweist, übertragen wird, wobei das Bestimmen des Grades der Lufteinschlüsse des Reifens (1) mittels der Künstliche-Intelligenz-Komponente (6) anhand des mittels der Shearographiekomponente (5) aufgenommenen Aufnahme der Reifenoberfläche (2), in Abhängigkeit der weiteren shearographischen Aufnahme und der der weiteren shearographischen Aufnahme zugeordneten Information durchgeführt wird.

5. Verfahren nach einem der vorhergehenden Ansprüche, **gekennzeichnet durch** die weiteren Schritte: Bereitstellen einer Reifenweiterverarbeitungskomponente (8), wobei die Reifenweiterverarbeitungskomponente (8) zur Weiterverarbeitung eines Reifens (1) vorgesehen ist, und Empfangen des Prozessfortführungssignals durch die Reifenweiterverarbeitungskomponente (8).

6. Verfahren nach einem der vorhergehenden Ansprüche, **dadurch gekennzeichnet, dass** die zuvor genannten Verfahrensschritte mehrfach nacheinander ausgeführt werden und eine Big-Data-Auswertung der shearographischen Aufnahmen der Reifenoberflächen (2) und der Bilder der Seitenwandbereiche (3) vorgenommen wird.

## Claims

1. Method for determining the processability of a tyre (1), comprising one of the following steps:
- providing a tyre (1), having a tyre surface (2), wherein the tyre surface (2) has sidewall regions (3);
- providing a shearography component (5),
- generating a shearographic recording of the tyre surface (2) by means of the shearography component (5), **characterized by** the further steps of:
- providing a processing component (6), wherein the processing component (6) is intended for processing a shearographic recording of the tyre surface (2) recorded by means of the shearography component (5);
- transferring the shearographic recording of the tyre surface (2) generated by means of the shearography component (5) to the processing component (6);
- determining by means of the processing component (6) on the basis of the shearographic recording of the tyre surface (2) generated by means of the shearography component (5) the extent to which the tyre (1) has air inclusions;
- emitting a process continuation signal by means of the processing component (6), wherein the process continuation signal is only sent if the extent to which the tyre (1) has air inclusions that is determined by means of the processing component (6) does not exceed a maximum extent, wherein the processing component (6) is an artificial intelligence component (6).

2. Method according to one of the preceding claims, **characterized by** the further steps of:
- providing a recording component (4), wherein the recording component (4) is intended for recording an image of a sidewall region (3);
- recording an image of the sidewall region (3) by means of the recording component (4);
- transferring the image of the sidewall region (3) recorded by means of the recording component (4) to the processing component (6), which is intended for processing an image of the sidewall region (3) recorded by means of the recording component (4);
- checking by means of the processing component (6) on the basis of the image of the sidewall region (3) recorded by means of the recording component (4) whether technical operating information is stored in a readable form on the sidewall region (3);
- emitting the process continuation signal by means of the processing component (6), wherein the process continuation signal is only sent if the technical operating information is stored in a readable form on the sidewall region (3) and the extent to which the tyre (1) has air inclusions that is determined by means of the processing component (6) does not exceed a maximum extent.

3. Method according to Claim 2, **characterized in that** at least one further image of a sidewall region (3) is transferred to the artificial intelligence component (6) together with information assigned to the further image concerning whether technical operating information is stored in a readable form in the sidewall region (3) reproduced in the further image, wherein the checking by means of the artificial intelligence component (6) on the basis of the image of the sidewall region (3) recorded by means of the recording component (4) whether technical operating information is stored in a readable form on the sidewall region (3) is carried out in dependence on the further image and the information assigned to the further image.

4. Method according to one of the preceding Claims 1 to 3, **characterized in that** at least one further shearographic recording of a tyre surface (2) is transferred to the artificial intelligence component (6) together with information assigned to the further shearographic recording concerning the extent to which the tyre (1) reproduced in the further shearographic recording has air inclusions, wherein the determination of the extent to which the tyre (1) has air inclusions by means of the artificial intelligence component (6) on the basis of the recording of the tyre surface (2) recorded by means of the shearography component (5) is carried out in dependence on the further shearographic recording and the information assigned to the further shearographic recording.

5. Method according to one of the preceding claims, **characterized by** the further steps of: providing a tyre further-processing component (8), wherein the tyre further-processing component (8) is intended for further processing a tyre (1), and receiving the process continuation signal by the tyre further-processing component (8).

6. Method according to one of the preceding claims, **characterized in that** the aforementioned method steps are carried out multiple times in succession and a big data evaluation of the shearographic recordings of the tyre surfaces (2) and of the images of the sidewall regions (3) is performed.

## Revendications

1. Procédé de détermination de l'aptitude au traitement d'un pneumatique (1), comprenant l'une des étapes suivantes
- fourniture d'un pneumatique (1), présentant une surface de pneumatique (2), la surface de pneumatique (2) présentant des zones de flanc (3) ;
- fourniture d'un composant de shearographie (5) ;
- génération d'un enregistrement de shearographie de la surface du pneumatique (2) à l'aide du composant de shearographie (5), **caractérisé par** les étapes supplémentaires suivantes :
- fourniture d'un composant de traitement (6), le composant de traitement (6) étant prévu pour le traitement d'un enregistrement de shearographie de la surface du pneumatique (2) enregistré au moyen du composant de shearographie (5),
- transmission au composant de traitement (6) de l'enregistrement de shearographie de la surface du pneumatique (2) généré au moyen du composant de shearographie (5) ;
- détermination, au moyen du composant de traitement (6) et à l'aide de l'enregistrement de shearographie de la surface du pneumatique (2) généré au moyen du composant de shearographie (5), du degré d'inclusions d'air que présente le pneumatique (1) ;
- émission d'un signal de poursuite de processus au moyen du composant de traitement (6), le signal de poursuite de processus n'étant envoyé que lorsque le degré d'inclusions d'air du pneumatique (1) déterminé au moyen du composant de traitement (6) ne dépasse pas un degré maximal, le composant de traitement (6) étant un composant d'intelligence artificielle (6).

2. Procédé selon l'une des revendications précédentes, **caractérisé par** les étapes supplémentaires suivantes :
- fourniture d'un composant d'enregistrement (4), le composant d'enregistrement (4) étant prévu pour enregistrer une image d'une zone de flanc (3) ;
- enregistrement d'une image de la zone de flanc (3) au moyen du composant d'enregistrement (4) ;
- transmission de l'image de la zone de flanc (3) enregistrée au moyen du composant d'enregistrement (4) au composant de traitement (6), qui est prévu pour traiter une image de la zone de flanc (3) enregistrée au moyen du composant d'enregistrement (4) ;
- vérification, au moyen du composant de traitement (6) à l'aide de l'image de la zone de flanc (3) enregistrée au moyen du composant d'enregistrement (4), si une information opérationnelle technique est mémorisée de manière lisible au niveau de la zone de flanc (3) ;
- émission du signal de poursuite de processus au moyen du composant de traitement (6), le signal de poursuite de processus n'étant envoyé que lorsque l'information opérationnelle technique est mémorisée de manière lisible au niveau de la zone de flanc (3) et que le degré d'inclusions d'air du pneumatique (1) déterminé au moyen du composant de traitement (6) ne dépasse pas un degré maximal.

3. Procédé selon la revendication 2, **caractérisé en ce qu'**au moins une image supplémentaire d'une zone de flanc (3) est transmise au composant d'intelligence artificielle (6), conjointement avec une information associée à l'image supplémentaire indiquant si une information opérationnelle technique est mémorisée de manière lisible dans la zone de flanc (3) reproduite sur l'image supplémentaire, la vérification, au moyen du composant d'intelligence artificielle (6) à l'aide de l'image de la zone de flanc (3) enregistrée au moyen du composant d'enregistrement (4), si une information opérationnelle technique est mémorisée de manière lisible au niveau de la zone de flanc (3), étant effectuée en fonction de l'image supplémentaire et de l'information associée à l'image supplémentaire.

4. Procédé selon l'une des revendications précédentes 1 à 3, **caractérisé en ce qu'**au moins un enregistrement de shearographie supplémentaire d'une surface de pneumatique (2) est transmis au composant d'intelligence artificielle (6), conjointement avec une information associée à l'enregistrement de shearographie supplémentaire concernant le degré d'inclusions d'air que présente le pneumatique (1) reproduit dans l'enregistrement de shearographie supplémentaire, la détermination du degré d'inclusions d'air du pneumatique (1) étant effectuée au moyen du composant d'intelligence artificielle (6) à l'aide de l'enregistrement de la surface du pneumatique (2) enregistré au moyen du composant de shearographie (5), en fonction de l'enregistrement de shearographie supplémentaire et de l'information associée à l'enregistrement de shearographie supplémentaire.

5. Procédé selon l'une des revendications précédentes, **caractérisé par** les étapes supplémentaires suivantes : fourniture d'un composant de traitement ultérieur de pneumatique (8), le composant de traitement ultérieur de pneumatique (8) étant prévu pour le traitement ultérieur d'un pneumatique (1), et réception du signal de poursuite de processus par le composant de traitement ultérieur de pneumatique (8).

6. Procédé selon l'une des revendications précédentes, **caractérisé en ce que** les étapes mentionnées précédemment sont exécutées plusieurs fois les unes à la suite des autres et une évaluation des données massives des enregistrements de shearographie des surfaces de pneumatique (2) et des images des zones de flanc (3) est effectuée.
